# EUROPÄISCHE PATENTSCHRIFT

(11) **EP 3 781 004 B1**
(45) Veröffentlichungstag und Bekanntmachung des Hinweises auf die Patenterteilung: **10.05.2023**
(21) Anmeldenummer: 19718126.6
(22) Anmeldetag: 11.04.2019
(51) Int. Cl.: A47J 31/46, A47J 31/10, A47J 31/50, A47J 31/00, A47J 31/60

(54) **FILTERKAFFEEMASCHINE**
FILTER COFFEE MACHINE
MACHINE À CAFÉ À FILTRE

(30) Priorität: 17.04.2018 DE 202018102091 U; 23.05.2018 DE 202018102872 U
(43) Veröffentlichungstag der Anmeldung: 24.02.2021
(73) Patentinhaber: Melitta Professional Coffee Solutions GmbH & Co. KG, 32429 Minden (DE)
(72) Erfinder: BUCHHOLZ, Bernd, 32369 Rahden (DE); HALLMANN, Kai, 32423 Minden (DE); SCHMALKUCHE, Jens, 32457 Porta Westfalica (DE)
(74) Vertreter: Specht, Peter
(86) Internationale Anmeldenummer: PCT/EP2019/059277
(87) Internationale Veröffentlichungsnummer: WO 2019/201740

(56) Entgegenhaltungen:
- DE-T2- 69 402 388
- DE-U1-202009 007 946
- US-B1- 7 234 389
- US-B1- 7 565 860
- US-B2- 8 910 564

## Beschreibung

Die vorliegende Erfindung betrifft eine Kaffeemaschine, das heißt eine Filterkaffeemaschine, zur Zubereitung eines koffeinhaltigen Heißgetränks nach dem Oberbegriff des Anspruchs 1.

Einen gattungsgemäßen Stand der Technik offenbaren jeweils die US 8 910 564 B2 und die DE 694 02 388 T2. Zum technologischen Hintergrund wird ferner die US 7 234 389 B1 genannt.

Derartige Kaffeemaschinen, insbesondere Filterkaffeemaschinen, sind in den vielfältigsten Ausführungsformen bekannt. Vor diesem Hintergrund ist es die Aufgabe der Erfindung, die Ausgabe des Kaffees zu optimieren, um bei der Konstruktion von Kaffeemaschinen, insbesondere Filterkaffeemaschinen, der gattungsgemäßen Art neue Wege gehen zu können.

Die vorliegende Erfindung löst diese Aufgabe durch eine Kaffeemaschine, insbesondere eine Filterkaffeemaschine, mit den Merkmalen des Anspruchs 1.

Geschaffen wird eine Kaffeemaschine, die eine Filterkaffeemaschine ist, zur Zubereitung eines koffeinhaltiges Heißgetränkes, mit einem Boiler zur Erzeugung heißen Wassers und mit wenigstens einer dem Boiler nachgeschalteten Brüheinheit, die veine Kaffee-Filtereinheit ist, sowie mit wenigstens einem oder mehreren der Brüheinheit nachgeschalteten Sammelbehälter(n), insbesondere Warmhaltebehälter(n), aus welchem/welchen ein zubereitetes koffeinhaltiges Heißgetränk durch wenigstens eine Auslassleitung zu wenigstens einer Ausgabeeinrichtung leitbar ist, um es beim Öffnen der wenigstens einen Ausgabeeinrichtung in ein Gefäß wie eine Tasse auszugeben, gekennzeichnet durch wenigstens eine oder mehrere Flüssigkeitspumpe(n) zum Fördern von Flüssigkeit, insbesondere des koffeinhaltigen Heißgetränkes, aus dem wenigstens einen Sammelbehälter in Richtung der wenigstens einen Ausgabeeinrichtung und/oder zum Fördern von Flüssigkeit in der entgegengesetzten Richtung, insbesondere zurück in den wenigstens einen Sammelbehälter. Dabei ist die wenigstens eine Ausgabeeinrichtung höher angeordnet ist als die Stelle, an welcher die eine oder mehreren Auslassleitung(en) aus dem oder den Sammelbehälter(n) geführt ist.

Die Erfindung ermöglicht es, bei der Konstruktion einer Kaffeemaschine, insbesondere einer Filterkaffeemaschine, besonders bevorzugt eines Kaffee-Filter-Vollautomaten, neue Wege zu gehen, da der wenigstens eine Auslass höher angeordnet werden kann als dies nach dem Stand der Technik möglich war. Denn ein großer Nachteil des Standes der Technik ohne die Flüssigkeitspumpe zum Fördern des Kaffees zum Auslass lag darin, dass zwingend ein Gefälle vom Sammelbehälter zum Auslass bestehen musste. Hieraus ergaben sich zwangsläufig Einschränkungen bei der Höhe des Getränkegefäßes in Bezug zur Ausgabehöhe. Dieses Problem wird durch die Erfindung in einfacher und kostengünstiger Weise gelöst.

Die Erfindung bietet aber auch die Gelegenheit zur Beseitigung weiterer Nachteile des Standes der Technik. So wurde nach dem Stand der Technik durch den freien Auslass bei sinkendem Füllstand im Sammelbehälter die Ausgabegeschwindigkeit des Kaffeegetränkes kontinuierlich geringer. Auch dies Problem wird erfindungsgemäß behebbar bzw. behoben, wenn die Fördermenge der Flüssigkeitspumpe konstant eingestellt werden kann.

Es ist nach Anspruch 1 weiter vorteilhaft vorgesehen, dass die wenigstens eine oder mehreren Flüssigkeitspumpe(n) von einer Steuereinrichtung ansteuerbar ist/sind. Die jeweilige Flüssigkeitspumpe kann nach einer weiteren vorteilhaften Ausgestaltung dieses Gedankens als - in der Regel kostengünstige und leicht und präzise ansteuerbare - Zahnradpumpe ausgelegt sein. Sie kann dabei bevorzugt über die Steuereinrichtung hinsichtlich ihrer Förderparamater - beispielsweise durch Beeinflussung er Drehzahl - ansteuerbar sein, insbesondere auch in beide Richtungen angesteuert werden.

Vorteilhaft ist auch, dass derart eine gleichbleibende Volumendosierung unabhängig vom Füllstand des Warmhalters angesteuert werden kann.

Nach einer vorteilhaften Ausgestaltung ist die wenigstens eine Flüssigkeitspumpe direkt in die wenigstens eine Auslassleitung zwischen den wenigstens einen Sammelbehälter und die wenigstens eine Ausgabeeinrichtung geschaltet.

Optional kann vorgesehen sein, dass jeweils eine vor die Flüssigkeitspumpe geschaltete Filtereinrichtung wie ein Filtersieb die Flüssigkeitspumpe vor Verunreinigung schützt. Dann kann ferner vorgesehen sein, dass ein Reinigen des Filtersiebes (Rückspülen) mit der Flüssigkeitspumpe über eine Ausgabeeinrichtung insbesondere zyklisch in einen Ablauf erfolgt.

Es kann besonders vorteilhaft vorgesehen sein, dass die jeweilige Flüssigkeitspumpe zum Fördern in zwei Richtungen ausgelegt und ansteuerbar ist.

Denn derart kann weiter vorgesehen sein, dass mit der jeweiligen Flüssigkeitspumpe in einfacher Weise Wasser und/oder Reinigungsflüssigkeit durch aus dem jeweiligen Sammelbehälter und die jeweilige Brüheinheit, insbesondere den Kaffeefilter, zurück förderbar ist, um diese Einheiten zu reinigen.

Zudem kann das Filtersieb in der Brüheinheit mittels Flüssigkeit von unten her gespült und gereinigt werden.

Denkbar ist es auch, dass die Produktausgabe durch einen Strahlregler als Ausgabeeinrichtung erfolgt (Perlator).

Der Begriff koffeinhaltiges Heißgetränk im Sinne der vorliegenden Erfindung betrifft einen Kaffee, insbesondere einen Filterkaffee und andere koffeinhaltige Heißgetränke wie Tee.

Vorteilhafte Ausgestaltungen der Erfindung sind Gegenstand der übrigen Unteransprüche.

Nachfolgend wird die Erfindung in mehreren Ausführungsvarianten anhand der beiliegenden Figuren näher erläutert, wobei die Erfindung nicht auf die konkreten dargestellten Ausführungsvarianten beschränkt ist. Es zeigt:
- Fig. 1:: eine schematische Darstellung einer Ausführungsvariante einer ersten Variante einer erfindungsgemäßen Kaffee-Filtermaschine; und
- Fig. 2:: eine schematische Darstellung einer Ausführungsvariante einer zweiten Variante einer erfindungsgemäßen Kaffee-Filtermaschine.

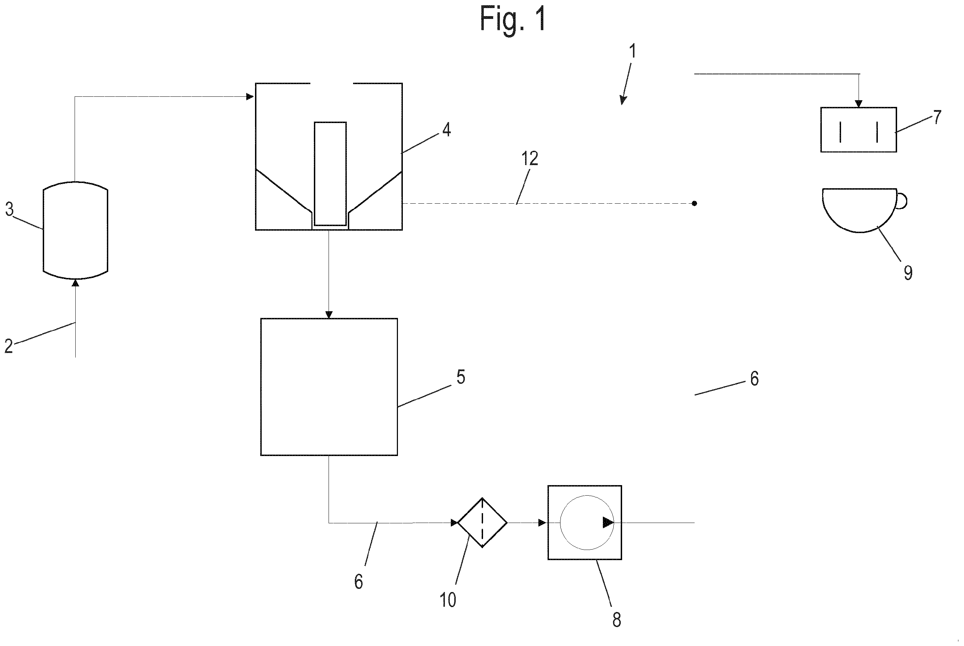

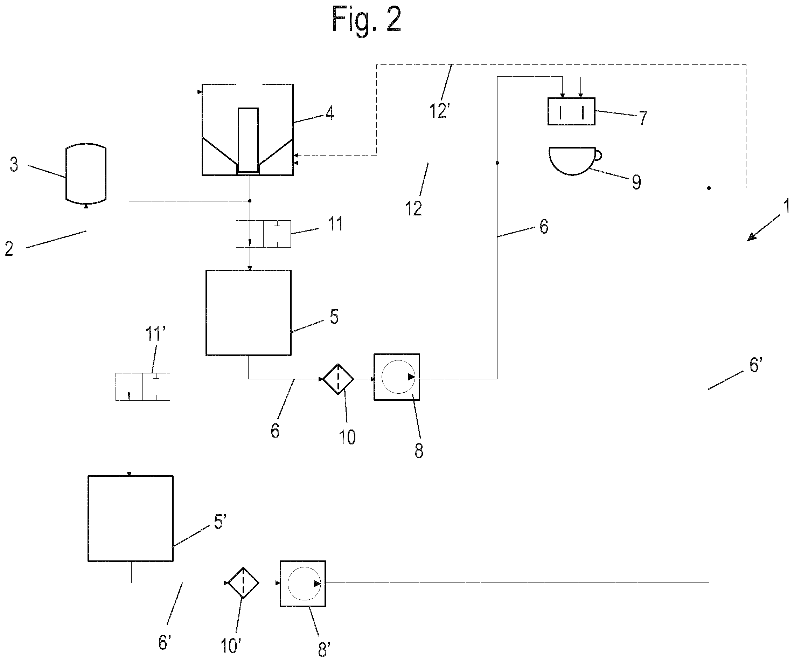

Fig. 1 und 2 zeigen jeweils Ausführungsvarianten von Teilen von Kaffeemaschinen 1, die jeweils insbesondere als Filterkaffeemaschine und besonders vorteilhaft als Kaffee-Filtervollautomat ausgestaltet sein können.

Die jeweilige Kaffeemaschine 1 weist eine Wasserzuleitung 2 auf, welche beispielsweise an einen herkömmlichen Wasserhahn, eine Hausleitung oder dergleichen angeschlossen sein kann.

Die jeweilige Wasserzuleitung 2 mündet in einen Boiler 3. Der Boiler 3 dient zur Erzeugung heißen, insbesondere siedenden Wassers.

Das durch den jeweiligen Boiler 3 der Fig. 1 oder 2 erhitzte Wasser kann aus diesem direkt oder über hier nicht dargestellte zwischengeschaltete Einrichtungen - vorzugsweise im Wesentlichen drucklos - in eine Brüheinheit wie einen Kaffeefilter 4 geleitet werden, wobei letzterer zur Zubereitung eines koffeinhaltigen Heißgetränkes wie Kaffee mit Kaffeemehl und Wasser befüllbar ist. Der Kaffeefilter kann als Metallfilter ausgebildet sein. Er kann ferner dazu ausgelegt sein, automatisch befüllt und nach dem Zubereiten eines Kaffees automatisch gereinigt zu werden.

Aus der Brüheinheit, hier dem Kaffeefilter 4, fließt der gefilterte Kaffee in wenigstens nach Fig. 1 in hier einen einzigen Sammelbehälter 5, insbesondere einen Warmhaltebehälter 5.

Aus dem Sammelbehälter 5 kann der Kaffee durch eine Auslassleitung 6 zu einer Ausgabeeinrichtung 7 fließen, die ein freier verschließbarer Auslass sein kann. Beim Öffnen dieser Ausgabeeinrichtung 7 fließt der zubereitete Kaffee in ein Gefäß wie eine Tasse 9.

Dabei ist zwischen den Sammelbehälter 5 und die wenigstens eine Ausgabeeinrichtung 7 eine Flüssigkeitspumpe 8 in die Auslassleitung 6 geschaltet.

Diese Flüssigkeitspumpe 8 hat den Vorteil, dass mit ihr das zubereitete koffeinhaltige Heißgetränk mit zusätzlichen Druck gefördert werden kann, so dass die Ausgabeeinrichtung 7 in einer größeren Höhe angebracht werden kann als nach dem Stand der Technik der Fall war, bei dem die Position des Sammelbehälters 5 die mögliche Höhe der Ausgabeeinrichtung bestimmt hat. Zudem ist es möglich, den Kaffee durch hier nicht dargestellte weitere Einrichtungen zu fördern.

Dies ermöglicht es wiederum, bei der Konstruktion einer Filterkaffeemaschine neue Wege zu gehen, beispielsweise, da die wenigstens eine Ausgabeeinrichtung 7 höher angeordnet werden kann als dies nach dem Stand der Technik möglich war, beispielsweise auch deutlich höher als die Stelle, an welcher die Auslassleitung 6 aus dem Sammelbehälter 5 herausgeführt wird bzw. ist.

Vorteilhaft ist dies auch, wenn mehr als ein Sammelbehälter 5 vorgesehen ist, beispielsweise zwei Warmhaltebehälter, die abwechselnd befüllt werden. Denn dann können diese beispielsweise auch einfach in verschiedenen Höhen angeordnet werden. Die Flüssigkeitspumpe 8 ist dann vorzugsweise in Hauptfließrichtung des Kaffees hinter einer Stelle vorgesehen, an welcher die Auslassleitungen aus diesen zwei Behältern vor der Ausgabeeinrichtung 7 zusammengeführt sind.

Optional kann vorgesehen sein, dass eine vor die Flüssigkeitspumpe 8 geschaltete Filtereinrichtung 10 wie ein Filtersieb die Flüssigkeitspumpe 8 vor Verunreinigung schützt.

Es kann auch optional vorgesehen sein, dass zwei oder mehr der Ausgabeeinrichtungen vorgesehen sind, die in gleicher oder verschiedener Höhe vorgesehen sein können.

Es kann auch optional vorgesehen sein, dass zwei oder mehr der Flüssigkeitspumpen 8 vorgesehen sind. Eine solche Ausführungsform zeigt Fig. 2. Dabei sind verschiedene Ausgestaltungen denkbar. So ist es denkbar, der nur einen Brüheinheit 4 zwei Leitungspfade nachzuschalten, die jeweils einen Sammelbehälter 5, 5' und jeweils eine Auslassleitung 6, 6' aufweisen können. Dabei können den Auslassleitungen 6, 6' jeweils separate Ausgabeeinrichtungen 7 zugeordnet sein oder es kann vorgesehen sein, dass die beiden Auslassleitungen in die gleiche Ausgabeeinrichtung 7 münden. Derart sind verschiedenste Varianten realisierbar, welche eine Anpassung an verschiedenste Vorgaben und Kundenwünsche ermöglichen. So können die beiden Sammelbehälter 5, 5' nebeneinander oder vertikal übereinander angeordnet werden. Die beiden Flüssigkeitspumpen 8, 8' ermöglichen insofern in einfacher Weise verschiedenste Ausgestaltungen unabhängig von der Anordnung der Ausgabeeinrichtung(en). Denn beiden Flüssigkeitspumpen 8, 8' bieten dann jeweils den Vorteil, dass mit ihnen das zubereitete koffeinhaltige Heißgetränk mit zusätzlichen Druck gefördert werden kann, so dass die Ausgabeeinrichtung(en) unabhängiger z.B. in einer größeren Höhe angebracht werden kann/können als nach dem Stand der Technik der Fall war. Dies ermöglicht es wiederum, bei der Konstruktion einer Filterkaffeemaschine neue Wege zu gehen, beispielsweise, da die wenigstens eine Ausgabeeinrichtung 7 höher angeordnet werden kann als dies nach dem Stand der Technik möglich war, beispielsweise auch deutlich höher als die Stelle, an welcher die Auslassleitung 6 aus dem Sammelbehälter 5 herausgeführt wird bzw. ist.

Optional kann wiederum vorgesehen sein, dass auch hier jeweils eine vor die jeweilige Flüssigkeitspumpe 8, 8' geschaltete Filtereinrichtung 10, 10' wie ein Filtersieb die Flüssigkeitspumpe 8 vor Verunreinigung schützt.

Es ist zweckmäßig, zwischen die Brüheinheit, hier den Kaffeefilter 4, und den oder die beiden Sammelbehälter 5, 5' jeweils ansteuerbare Ventile 11, 11' - insbesondere Absperrventile - vor den oder die jeweiligen Sammelbehälter 5, 5' zu schalten. Denn derart kann im Zusammenspiel mit der Steuereinrichtung einfach gesteuert werden, welcher der beiden Sammelbehälter 5 jeweils mit dem aus der hier einen Brüheinheit 4 oder einer von mehreren Brüheinheiten 4 zubereitetem Kaffee befüllt werden soll. Dies Befüllen kann z.B. kann in Abhängigkeit von verschiedenen Parametern, so vom Füllstand und/oder der verstrichenen Zeit seit der letzten Befüllung erfolgen.

Durch - hier gestrichelt dargestellte - Leitungen 12, 12' zwischen den Auslassleitungen 6, 6', die durch hier nicht dargestellte ansteuerbare Wegeventile alternativ nutzbar sind und zurück in die Brüheinheit 4 geführt sind, können Spülvorgänge und dgl. initiiert werden. Auf hier wirkt/wirken die Flüssigkeitspumpe(n) sehr vorteilhaft.

## Patentansprüche

1. Kaffeemaschine, das heißt Filterkaffeemaschine, zur Zubereitung eines koffeinhaltiges Heißgetränkes, mit einem Boiler (3) zur Erzeugung heißen, insbesondere siedenden Wassers und mit einer dem Boiler (3) nachgeschalteten Brüheinheit, die eine Kaffee-Filtereinheit (4) ist, sowie mit wenigstens einem der Brüheinheit (4) nachgeschalteten Sammelbehälter (5, 5'), aus welchem ein zubereitetes koffeinhaltiges Heißgetränk insbesondere durch eine Auslassleitung (6, 6') zu einer wenigstens einer Ausgabeeinrichtung (7, 7') leitbar ist, um es beim Öffnen der Ausgabeeinrichtung auszugeben, und mit wenigstens einer oder mehreren Flüssigkeitspumpe(n) (8) zum Fördern von Flüssigkeit, insbesondere des koffeinhaltigen Heißgetränkes, aus dem wenigstens einen Sammelbehälter (5, 5') in Richtung der wenigstens einen Ausgabeeinrichtung (7, 7') und/oder zum Fördern von Flüssigkeit in der entgegengesetzten Richtung, **dadurch gekennzeichnet, dass** die wenigstens eine oder mehreren Flüssigkeitspumpe(n) (8) von einer Steuereinrichtung ansteuerbar ist/sind und dass die wenigstens eine Ausgabeeinrichtung (7) höher angeordnet ist als die Stelle, an welcher die eine oder mehreren Auslassleitung(en) (6) aus dem oder den Sammelbehälter(n) (5) geführt ist.

2. Filterkaffeemaschine nach Anspruch 1, **dadurch gekennzeichnet, dass** die Flüssigkeitspumpe (8) in die Auslassleitung (6) zwischen dem Sammelbehälter (5) und der Ausgabeeinrichtung (7) geschaltet ist.

3. Filterkaffeemaschine nach Anspruch 1, **dadurch gekennzeichnet, dass** jeweils eine der Flüssigkeitspumpen (8) in jeweils eine mehrerer Auslassleitungen (6) zwischen dem Sammelbehälter (5) und der Ausgabeeinrichtung (7) geschaltet ist.

4. Filterkaffeemaschine nach einem der vorstehenden Ansprüche, **dadurch gekennzeichnet, dass** die wenigstens eine Flüssigkeitspumpe (8) als Zahnradpumpe ausgebildet ist.

5. Filterkaffeemaschine nach einem der vorstehenden Ansprüche, **dadurch gekennzeichnet, dass** die wenigstens eine oder mehreren Flüssigkeitspumpe (8, 8') zum Fördern in zwei Richtungen ausgelegt und ansteuerbar ist/sind.

6. Filterkaffeemaschine nach einem der vorstehenden Ansprüche, **dadurch gekennzeichnet, dass** der einen oder jeder Flüssigkeitspumpe (8, 8') eine Filtereinrichtung (10, 10') zugeordnet ist, die insbesondere zwischen den Sammelbehälter (5) und die Flüssigkeitspumpe (8) geschaltet ist.

7. Filterkaffeemaschine nach einem der vorstehenden Ansprüche, **dadurch gekennzeichnet, dass** mit der einen oder den mehreren Flüssigkeitspumpe(n) (8) Wasser und/oder Reinigungsflüssigkeit durch den oder die Sammelbehälter (5) und den oder die Brüheinheiten (4), insbesondere den oder die Kaffeefilter, zurück förderbar ist, um diese eine oder mehreren Einheiten zu reinigen.

8. Filterkaffeemaschine nach einem der vorstehenden Ansprüche, **dadurch gekennzeichnet, dass** die wenigstens eine Ausgabeeinrichtung (7) höher angeordnet ist als der wenigstens eine oder einer der mehreren oder die mehreren Sammelbehälter (5).

9. Filterkaffeemaschine nach einem der vorstehenden Ansprüche, **dadurch gekennzeichnet, dass** zwei der Sammelbehälter (5) vorgesehen sind.

10. Filterkaffeemaschine nach einem der vorstehenden Ansprüche, **dadurch gekennzeichnet, dass** zwei der Ausgabeeinrichtungen (7) vorgesehen sind.

11. Filterkaffeemaschine nach einem der vorstehenden Ansprüche, **dadurch gekennzeichnet, dass** zwei der Flüssigkeitspumpen (8) vorgesehen sind.

12. Filterkaffeemaschine nach einem der vorstehenden Ansprüche, **dadurch gekennzeichnet, dass** zwischen die Brüheinheit und den oder die Sammelbehälter jeweils ansteuerbare Ventile (11, 11'), insbesondere Absperrventile, geschaltet sind.

## Claims

1. Coffee machine, i.e. filter coffee machine, for preparing a caffeinated hot beverage, having a boiler (3) for producing hot, in particular boiling, water and having a brewing unit installed downstream of the boiler (3), which is a coffee filter unit (4), and having at least one collection vessel (5, 5') installed downstream of the brewing unit (4), from which a prepared caffeinated hot beverage can be conducted in particular through an outlet conduit (6, 6') to at least one dispensing device (7, 7') in order to dispense it when the dispensing device is opened, and with at least one or more liquid pump(s) (8) for conveying liquid, in particular the caffeinated hot beverage, from the at least one collection vessel (5, 5') in the direction of the at least one dispensing device (7, 7') and/or for conveying liquid in the opposite direction, **characterized in that** the at least one or more liquid pump(s) (8) is/are controllable by a control device and that the at least one dispensing device (7) is arranged higher than the point at which the one or more outlet conduit(s) (6) is/are led out of the collection vessel(s) (5).

2. Filter coffee machine according to claim 1, **characterized in that** the liquid pump (8) is installed in the outlet conduit (6) between the collection vessel (5) and the dispensing device (7).

3. Filter coffee machine according to claim 1, **characterized in that** one of the liquid pumps (8) is installed in each case in one of several outlet conduits (6) between the collection vessel (5) and the dispensing device (7).

4. Filter coffee machine according to one of the preceding claims, **characterized in that** the at least one liquid pump (8) is designed as a gear pump.

5. Filter coffee machine according to one of the preceding claims, **characterized in that** the at least one or more liquid pumps (8, 8') is/are designed and controllable for delivery in two directions.

6. Filter coffee machine according to one of the preceding claims, **characterized in that** a filter device (10, 10') is associated with one or each liquid pump (8, 8'), which is connected in particular between the collection vessel (5) and the liquid pump (8).

7. Filter coffee machine according to one of the preceding claims, **characterized in that** water and/or cleaning liquid can be conveyed back through the collection vessel(s) (5) and the brewing unit(s) (4), in particular the coffee filter(s), by means of the one or more liquid pump(s) (8) in order to clean said one or more units.

8. Filter coffee machine according to one of the preceding claims, **characterized in that** the at least one dispensing device (7) is arranged higher than the at least one collection vessel (5), or one of the plurality or the plurality of collection vessels (5).

9. Filter coffee machine according to one of the preceding claims, **characterized in that** two of the collection vessels (5) are provided.

10. Filter coffee machine according to one of the preceding claims, **characterized in that** two of the dispensing devices (7) are provided.

11. Filter coffee machine according to one of the preceding claims, **characterized in that** two of the liquid pumps (8) are provided.

12. Filter coffee machine according to one of the preceding claims, **characterized in that** controllable valves (11, 11'), in particular shut-off valves, are installed between the brewing unit and the collection vessel(s).

## Revendications

1. Machine à café, c'est-à-dire machine à café à filtre, pour la préparation d'une boisson chaude contenant de la caféine, avec un chauffe-eau (3) pour produire de l'eau chaude, en particulier bouillante, et avec une unité d'infusion placée en aval du chauffe-eau (3), qui est une unité de filtre à café (4), ainsi qu'avec au moins un récipient de collecte (5, 5') placé en aval de l'unité d'infusion (4), à partir duquel une boisson chaude contenant de la caféine préparée peut être dirigée en particulier à travers une conduite d'évacuation (6, 6') vers au moins un dispositif distributeur (7, 7'), afin de la distribuer lorsque le dispositif distributeur est ouvert, et avec au moins une ou plusieurs pompes à liquide (8) pour transporter du liquide, en particulier la boisson chaude contenant de la caféine, depuis l'au moins un récipient de collecte (5, 5') en direction de l'au moins un dispositif distributeur (7, 7') et/ou pour transporter du liquide dans la direction opposée, **caractérisée en ce que** l'au moins une ou plusieurs pompes à liquide (8) peuvent être commandées par un dispositif de commande et **en ce que** l'au moins un dispositif distributeur (7) est disposé plus haut que l'endroit où la ou les plusieurs conduites d'évacuation (6) sont guidées hors du ou des récipients de collecte (5).

2. Machine à café à filtre selon la revendication 1, **caractérisée en ce que** la pompe à liquide (8) est montée dans la conduite d'évacuation (6) entre le récipient de collecte (5) et le dispositif distributeur (7).

3. Machine à café à filtre selon la revendication 1, **caractérisée en ce que** l'une respective des pompes à liquide (8) est montée dans l'une respective de plusieurs conduites d'évacuation (6) entre le récipient de collecte (5) et le dispositif distributeur (7).

4. Machine à café à filtre selon l'une quelconque des revendications précédentes, **caractérisée en ce que** l'au moins une pompe à liquide (8) est conçue comme une pompe à engrenages.

5. Machine à café à filtre selon l'une quelconque des revendications précédentes, **caractérisée en ce que** l'au moins une ou plusieurs pompes à liquide (8, 8') sont conçues et peuvent être commandées pour le transport dans deux directions.

6. Machine à café à filtre selon l'une quelconque des revendications précédentes, **caractérisée en ce qu'**à l'une ou à chaque pompe à liquide (8, 8') est associé un dispositif de filtration (10, 10') qui est notamment monté entre le réservoir de collecte (5) et la pompe à liquide (8).

7. Machine à café à filtre selon l'une quelconque des revendications précédentes, **caractérisée en ce que** la ou les plusieurs pompes à liquide (8) permettent de renvoyer de l'eau et/ou un liquide de nettoyage à travers le ou les récipients de collecte (5) et la ou les unités d'infusion (4), en particulier le ou les filtres à café, afin de nettoyer ladite une ou plusieurs unités.

8. Machine à café à filtre selon l'une quelconque des revendications précédentes, **caractérisée en ce que** l'au moins un dispositif distributeur (7) est disposé plus haut que l'au moins un ou l'un des plusieurs ou les plusieurs récipients de collecte (5).

9. Machine à café à filtre selon l'une quelconque des revendications précédentes, **caractérisée en ce que** deux desdits récipients de collecte (5) sont prévus.

10. Machine à café à filtre selon l'une quelconque des revendications précédentes, **caractérisée en ce que** deux desdits dispositifs distributeurs (7) sont prévus.

11. Machine à café à filtre selon l'une quelconque des revendications précédentes, **caractérisée en ce que** deux desdites pompes à liquide (8) sont prévues.

12. Machine à café à filtre selon l'une quelconque des revendications précédentes, **caractérisée en ce que** des vannes (11, 11') pouvant être commandées, en particulier des vannes d'arrêt, sont respectivement montées entre l'unité d'infusion et le ou les récipients de collecte.
